# EUROPEAN PATENT APPLICATION

(11) **EP 2 431 827 A1**
(43) Date of publication of application: **21.03.2012**
(21) Application number: 10177512.0
(22) Date of filing: 19.09.2010
(51) Int. Cl.: G05B 19/409, G05B 19/418

(54) **Identifying related data items**

(71) Applicant: ABB Research Ltd., 8050 Zürich (CH)
(72) Inventor: Stoeter, Sascha, CH-8050, Zürich (CH); Obermeier, Sebastian, CH-5107, Schinznach-Dorf (CH)
(74) Representative: ABB Patent Attorneys

(57) **Abstract**

The present invention is concerned with an identification of related data items out of an initial or base set of data items representative of a plurality of tangible assets of an Industrial Automation and Control System of a critical industrial process or system. Each data item comprises a number of parameters, e.g. relating to location or type of the asset, or to the role of the asset in the industrial process or system, as well as corresponding parameter values. The parameters are standardized in the sense that corresponding information from different assets is assigned to a same parameter. Increasingly refined sets of related data items are identified iteratively by selecting identifying parameters and parameter values.

## Description

### FIELD OF THE INVENTION

The invention relates to the field of Industrial Automation and Control Systems (IACS) for mission-critical industrial processes. In particular, it relates to a visualization of supervisory data pertaining to assets of the IACS.

### BACKGROUND OF THE INVENTION

Industrial Automation and Control Systems (IACS) are used extensively to protect, control and monitor industrial processes in industrial plants for e.g. processing goods or generating power, as well as to protect, control and monitor extended primary systems like electric power, water or gas supply systems including their respective substations. An IACS generally has a large number of process controllers, sensors, and actuators distributed in an industrial plant or over an extended primary system, and communicatively interconnected via an industrial communication system. Overall, an IACS may easily comprise thousands of assets including secondary devices (controllers, sensors, actuators, communication network equipment) and individual device components thereof, together making up the infrastructure or hardware part of the IACS. Accordingly, a consolidated status of an IACS depends on tens of thousands of heterogeneous data items representative of the various assets. This large number precludes a manual provision of a meaningful and complete data structure. Furthermore, assets of the IACS are added or removed at any time, the information that is required for an operator to effectively control the system depends on the current situation, and the personal preferences of an operator of the IACS may also change over time. Any static structure for all information is thus undesirable and may prevent the operator from quickly reaching the information of interest.

Current IACS generally offer a possibility to display IACS supervisory data, i.e. data relating to the health or other status of the assets involved. The visualization components or modules for this supervisory data, however, require a considerable engineering effort to pre-determine the structure, the corresponding hierarchy of the data, and the category of each data item. Current systems that offer a hierarchy mechanism for grouping data items place each data item in exactly one location. This is the case e.g. for any tree structure well known to every computer user, where each data item can be reached via exactly one path. Advanced IACS offer several customizable hierarchies that can be used for grouping of data according to a limited number of predefined views or tree structures that are precalculated in their entirety and can be expanded down to the lowest level at a single click.

In the context of the present invention, a distinction is made between process data indicative of the industrial process or primary system, and supervisory data related to the assets of the IACS or secondary system. Process operators have expert knowledge in operating the industrial process or primary system and in interpreting process data. If, for instance, steam is too hot, the operator knows exactly which temperature sensors to consult, and generally has an idea about the origin of the problem in terms of process flow. On the other hand, the process operator is not, at the same time, an expert for asset condition information or security events, and thus needs more guidance and/or flexibility in assessing asset condition related supervisory data. A rigid and unfocused structure for representing or displaying corresponding data is of little help.

### DESCRIPTION OF THE INVENTION

It is therefore an objective of the invention to support a process operator of a critical industrial process or primary system in the task of supervising the assets of an Industrial Automation and Control Systems IACS of the industrial process or system. This objective is achieved by a method of identifying related data items according to claim 1. Preferred embodiments are evident from the dependent patent claims, wherein the claim dependency shall not be construed as excluding further meaningful claim combinations.

According to the invention, related data items are identified out of an initial or base set of data items representative of a plurality of tangible assets of the IACS of the critical industrial process or system. Each data item comprises a number of parameters, e.g. relating to location or type of the asset, or to the role of the asset in the industrial process or system, as well as corresponding parameter values, wherein each asset may be represented by a number of data items with differing parameters and/or parameter values. A parameter may also be designated an attribute or a key of the asset. The parameters are standardized in the sense that corresponding information from different assets is assigned to, or represented by, a same parameter, hence the term parameter refers to a class or object rather than to an individual instance thereof at a specific data item. Specifically , the invention comprises the following steps:
In step a) an initial set of parameters consisting of all parameters assigned to, or included by, at least one of the data items of the initial set of data items is determined or consolidated at run-time, and displayed to a human operator of the industrial process;
In step b) an identifying parameter from the initial set of parameters is selected by the operator;
In step c) all parameter values of the identifying parameter assigned to the data items of the initial set are determined by parsing, at run-time, all data items that include the identifying parameter, and displayed to the human operator in a manner optionally grouping parameter values into parameter value ranges;
In step d) an identifying parameter value, or an optional value range, of the identifying parameter is selected by the operator;
In step e) a reduced set of data items comprising all data items of the initial set for which the value of the identifying parameter equals the selected identifying parameter value, or is comprised in the optional value range, is determined at run-time;
In step f) representations such as graphical icons, thumbnails, and/or alphanumeric names of the data items of the reduced set are listed, and displayed to the operator, as identified first-order related data items;
In step g) a reduced set of parameters comprising all parameters of the initial set of parameters that are assigned to at least one data item of the reduced set of data items, is determined, or consolidated, at run-time;
In step h), the reduced sets of data items and parameters are re-defined as respective initial sets, and steps b) to f) are repeated, thus generating a set of second-order or second generation identified data items. The process may be repeated, or iterated, further until the repeatedly reduced set of data items reaches a desired order or generation.

In a preferred variant of the invention, step f) includes displaying, in a dedicated window, some or all of the parameters and parameter values of an operator-selected data item of the reduced set.

In another preferred variant, for each parameter of the initial or reduced set of parameters, the total number of data items that are assigned a meaningful parameter value of the respective parameter is determined. These numbers are then indicated in a parameter listing on behalf of the operator for selecting the identifying parameter. Likewise, for each parameter value or parameter value range of a selected parameter, the total number of data items that have the respective parameter value, or that have a parameter value in the range, is determined and indicated on behalf of the operator in a listing of parameter values for selecting the identifying parameter value.

In a particular embodiment, one or several of the parameter values such as "temperature" and "°C" are indicative of a time-dependent asset property characterizing a dynamic asset condition, and the data items comprise, in addition to the parameters, corresponding asset property values. Exemplary asset properties include a real-value sensor reading such as an asset temperature, an integer-value available data storage space of the asset, or a number of asset operating hours, the values of which change more frequently than the parameter values. In this case, a supervisory data stream, or succession of data items, is defined by a set of specific parameter values, and updated asset property values are reported by referring to this data stream. Hence, only data items including a data stream identifier and the updated asset property value need to be communicated. A singular data item representative of the data stream is then included in the method of identifying related data items. Preferably, successive, time-dependent values of the asset property are buffered and ultimately displayed in a chart in a dedicated window.

In another embodiment, the data item exclusively comprises asset status information or asset event reports as its parameters. Asset status, or asset condition, here is assumed to change relatively infrequently, for which any change is reported by a new data item with a changed parameter value. For an asset event report, a corresponding parameter value may be binary, and basically confirming the fact that the respective parameter has been included in the data item. In particular, the data item includes a parameter reporting security or alarm events relating to an asset of an IACS, i.e. a successful login or a password change, a single failed login attempt, a creation of a new user. More severe security events include a denial-of-service attack on the device (overload with data), manual switching of the asset into debug mode, or a port scan of the asset. These events are occurring rather infrequently, and are buffered or stored for long-term consolidation and evaluation per event-type or parameter value.

While exemplary assets of the industrial process or system include robots, valves, switching devices, and conveyor belts, the assets of an Industrial Automation and Control Systems IACS include secondary devices or IT infrastructure equipment and their constituting components or parts, such as routers, servers, sensors, and controllers. The assets may be seen as data sources, wherein dedicated adapters or agents previously dispatched act as interfaces to the assets, compiling data from an asset-specific format into a data item with standardized parameters. The data items are reported whenever a changed parameter or asset property value is available, the latter constituting a data stream of time-dependent asset property values reported as a succession or series of data items. The values are stored in centralized or distributed data storage, from where they can be queried or retrieved in view of identification and listing on behalf of the operator.

In the area of Field Device Integration (FDI), the field device description known as EDD (Electronic Device Description) also defines parameter/value pairs. Hence, EDD is a possible source for meta-information about field devices, from which suitable data items can be generated automatically and subsequently identified and displayed in accordance with the invention.

### BRIEF DESCRIPTION OF THE DRAWINGS

The subject matter of the invention will be explained in more detail in the following text with reference to preferred exemplary embodiments which are illustrated in the attached drawings, in which:
- Fig. 1: shows two exemplary data items including meta-information;
- Fig.2: shows an excerpt of an exemplary hierarchical data structure with identified related data items;
- Figs.3 to 5: depict successive stages of a method of identifying related data items, and
- Fig.6: depicts parameters and an asset property history of a selected data item.

### DETAILED DESCRIPTION OF PREFERRED EMBODIMENTS

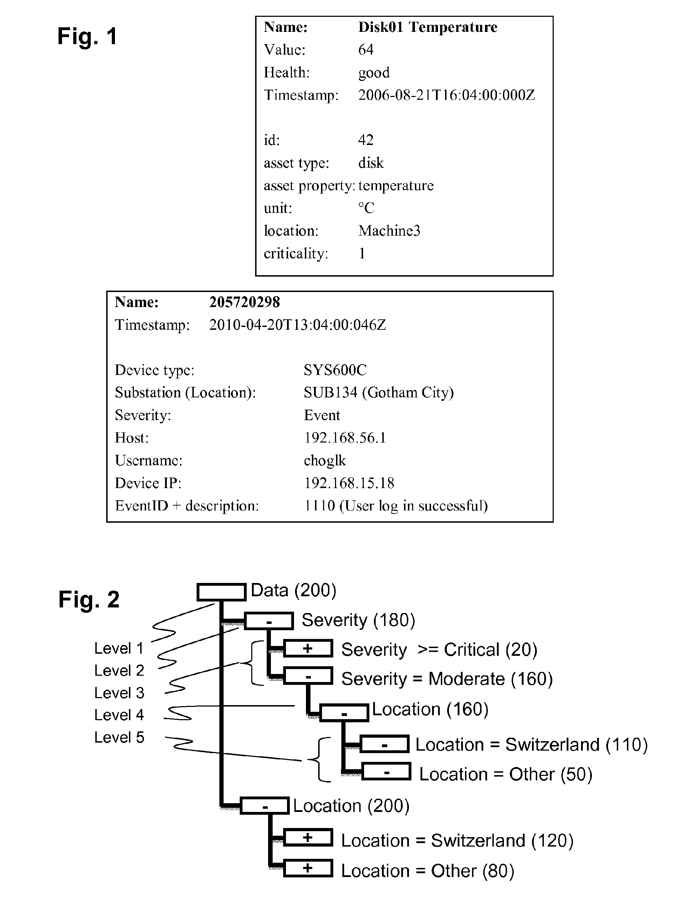

Fig. 1 shows two exemplary data items including meta-information. The first example reports a time-stamped asset property value of 64°C for the temperature of Disk01 where this instantaneous value has additionally been coded as "good" according to certain thresholds. The data item further has the parameters, or attributes, (i) "id", i.e. an identifier that is unique in the system (contrary to the asset name Disk01), (ii) asset type, (iii) specific asset property considered in the data item in suit, (iv) physical unit of the process values of the asset property, (v) location of the asset and (vi) criticality. In the example, the asset property value and corresponding health and timestamp representing the frequently changing asset information are listed separately from the static meta-information or descriptions represented by the parameters. A succession of data items with updated asset property values and otherwise identical parameter values defines a data stream that in turn is represented by a singular data item.

If a different asset property, such as the number of operating hours or the amount of available memory space, is to be communicated for the same asset, a different data item is created. The parameters retained may differ in number and information from one data item to another data item.

The second data item in Fig.1 does not report any frequently changing asset property but rather serves for reporting time-stamped security-related events. To this end, the data item has the information as to the event comprised in a number of related parameters, such as Username and EventID + description. A changing security status of the asset constitutes an exemplary security event, in which case a new data item with a different dedicated parameter is reported. Again, the data item is associated with further meta-information in the form of parameter, or attribute, name/value pairs.

The present invention proposes to dynamically organize or structure data items at run-time, based on meta-information that serves to identify and create subsets of IACS assets in the system. Hierarchical levels are prepared at run-time following repeated user interaction. The complete set of assets can be explored hierarchically in a characteristic two-step approach: First, a meta-information parameter name is selected from a list of these parameters. Second, a parameter value is selected from among all possible values of the selected parameter, wherein the parameter values are displayed only upon selection of the parameter name. The process allows exploring the set of all data items using multiple paths that are generated at run-time, i.e. only upon a corresponding request/click, and only to the next nearest level. The present invention contrasts with one or many pre-engineered paths or tree structures, and explicitly excludes a one-click access to a predefined and complete exploded view or tree structure comprising all assets.

Fig.2 shows an excerpt of an exemplary hierarchical data structure resulting from a method of identifying related data items in accordance wit the invention. For the sake of legibility, only two parameters of the data items are considered, i.e. Severity and Location with the respective parameter values "Switzerland" and "Other", as well as "Critical" and "Moderate". On the top level, the total number of data items is indicated to be equal 200.

On level 2 below the top level, the two parameters have been listed together with the respective number of data items actually featuring the parameter, i.e. the data items that have a meaningful, non-void respective parameter value (180 for Severity; all 200 for Location). On level 3, the parameter values of the two parameters are listed, again together with the respective number of data items having the respective parameter value (e.g. 20 data items featuring the value "Critical" of the parameter Severity). For the value "Moderate" of the Severity parameter, level 4 lists the Location parameter as the sole remaining parameter with, on level 5, the two values and corresponding numbers (e.g. 50 data items with Location outside "Switzerland" and Severity "Moderate").

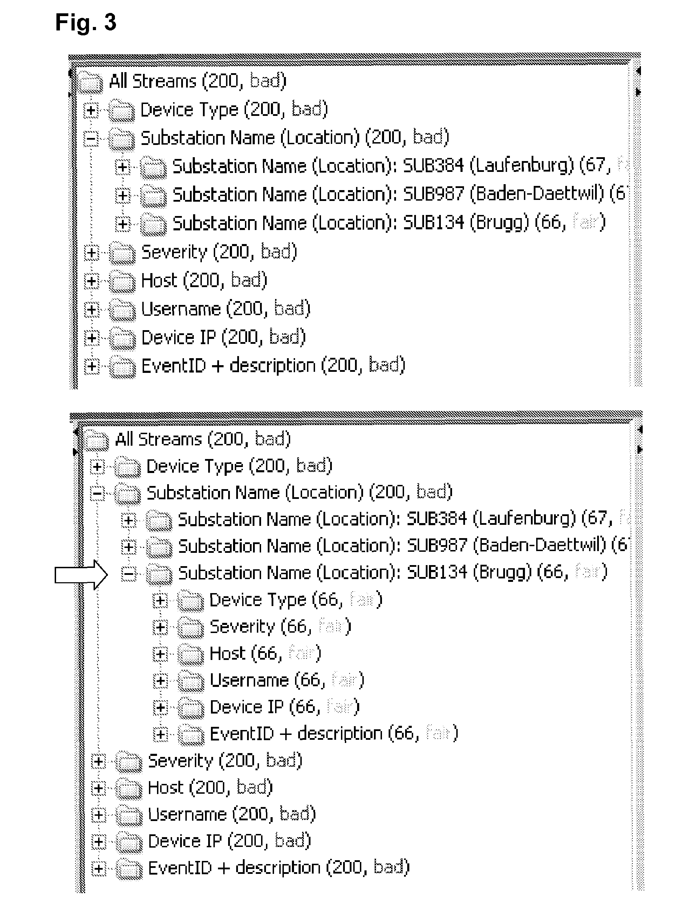

Fig.3 to Fig.5 depicts, in chronological order, how to identify related data items in accordance with the invention. The data items include the seven parameters enumerated in the 2^{nd} example of Fig.1 relating to security event reporting. In addition to the number of data items indicated on each line, a consolidated security value corresponding to the worst status of any one of the data items is likewise reported. The initial base set comprises 200 data items, all of which have all seven parameters forming the initial set of parameters.

In Fig.3, top representation, all parameters of the initial set of parameters are listed on the level 2. For the selected identifying parameter Substation Name (Location), the three parameter values "Laufenburg", "Baden-Daettwil", "Brugg" have been determined and listed. Upon selection of the identifying parameter value "Brugg", a reduced set of data items comprising all 66 data items for which the value of the identifying parameter Substation Name (Location) equals the selected identifying parameter value "Brugg" is determined and identified as related data items. A reduced set of parameters comprising all parameters of the initial set of parameters except the identifying parameter Substation Name (Location) is then determined. In Fig.3, bottom representation, these remaining six parameters are displayed below the selected identifying parameter value "Brugg".

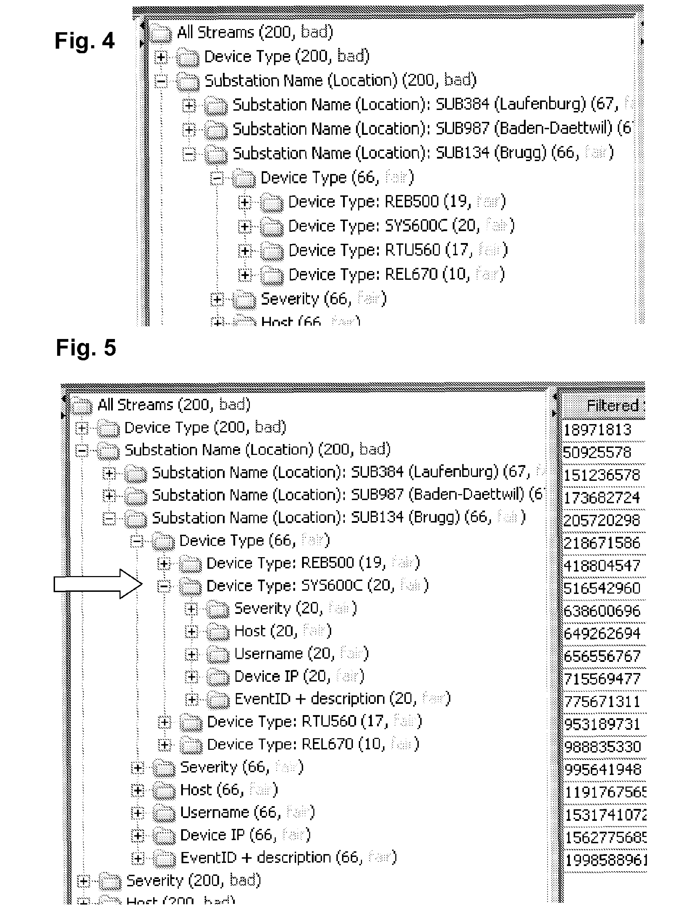

The process may then continue in an iterative manner, defining the reduced sets of data items and parameters as respective initial sets. In Fig.4, the parameter Device Type has been selected as the second generation identifying parameter, with four parameter values "REB500", "SYS600C", "RTU560", "REL670". The parameter value "SYS600C" has been selected as the second generation identifying parameter value. A total of 20 data items have this second generation identifying parameter value (in addition to the previous identifying parameter value "Brugg"), their names (9 digit numbers) are listed in the right hand column (entitled "Filtered") of Fig.5 as the identified related data items. The process may continue further to the third generation identifying parameter, e.g. the parameter "EventID + Description", until the repeatedly reduced set of identified related data items reaches a desired level / resolution.

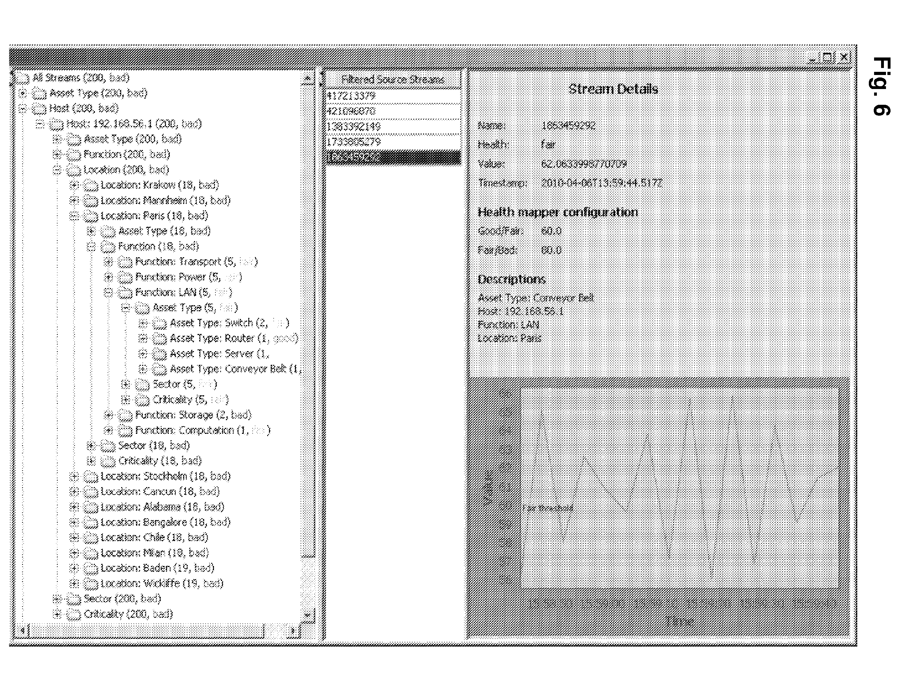

In Fig.6, the process of identifying related data items of a type similar to Fig.1, first example, has proceeded to the third generation (parameter value Host = 192.168.56.1; parameter value Location = Paris; parameter value Function = "LAN"), with only 5 data items left as the identified related items listed in the middle column. Furthermore, in the right hand column entitled "Stream Details", for the 5^{th} data item of the set of identified related data items, all the parameter values are listed. In addition, a history of the fast changing asset property "Temperature" is displayed graphically.

## Claims

1. A method of identifying related data items out of an initial set of data items representative of a plurality of assets of a critical industrial process or system, wherein each data item has a number of parameters and corresponding parameter values, comprising the steps of
a) determining an initial set of N parameters consisting of all parameters assigned to at least one of the data items of the initial set of data items,
b) selecting an identifying parameter from the initial set of parameters,
c) determining all parameter values of the identifying parameter assigned to data items of the initial set,
d) selecting an identifying parameter value, or a parameter value range, of the identifying parameter,
e) determining a reduced set of data items comprising all data items of the initial set for which a value of the identifying parameter equals the selected identifying parameter value or is comprised in the selected parameter value range,
f) listing representations of the data items of the reduced set of data items as identified related data items,
g) determining a reduced set of <N parameters comprising all parameters assigned to at least one of the data items of the reduced set of data items,
h) defining the reduced sets of data items and parameters as respective initial sets, and repeating steps b) to f).

2. The method according to claim 1, **characterized in that** step f) comprises f2) displaying the different parameters and corresponding parameter values of a selected data item of the reduced set.

3. The method according to claim 1, **characterized in that** step a) comprises a2) determining, for each parameter of the initial set of parameters, the totality of data items of the initial set of data items that are assigned a parameter value of the respective parameter.

4. The method according to claim 1, **characterized in that** step c) comprises c2) determining, for each parameter value of the identifying parameter, the totality of data items of the initial set of data items that are assigned the respective parameter value.

5. The method according to any of claims 1 to 4, wherein each data item of a succession of data items comprises an asset property value of a same asset property characteristic of a dynamic asset condition, and wherein the data items have otherwise identical parameters and parameter values, **characterized in that**
the succession of data items is included in the method as a singular data item.

6. The method according to claim 5, **characterized in that** step f) comprises f3) displaying a chart of successive asset property values.

7. The method according to any of claims 1 to 4, **characterized in that** a data item comprises a security event parameter relating to an asset of an Industrial Automation and Control System IACS of the industrial process or system.
